# EUROPÄISCHE PATENTSCHRIFT

(11) **EP 3 507 027 B1**
(45) Veröffentlichungstag und Bekanntmachung des Hinweises auf die Patenterteilung: **18.05.2022**
(21) Anmeldenummer: 17758541.1
(22) Anmeldetag: 29.08.2017
(51) Int. Cl.: B06B 1/06, B23K 20/10, B29C 65/08, B26D 7/08, B06B 3/00

(54) **ULTRASCHALLSCHWINGSYSTEM MIT MANTELFLÄCHENHALTERUNG**
ULTRASONIC VIBRATION SYSTEM HAVING A LATERAL SURFACE MOUNTING
SYSTÈME GÉNÉRATEUR D'ULTRASONS COMPORTANT UN SUPPORT DE SURFACE EXTÉRIEURE

(30) Priorität: 02.09.2016 DE 102016116429
(43) Veröffentlichungstag der Anmeldung: 10.07.2019
(73) Patentinhaber: Herrmann Ultraschalltechnik GmbH & Co. KG, 76307 Karlsbad (DE)
(72) Erfinder: VOGLER, Ulrich, 88690 Uhldingen-Mühlhofen (DE)
(74) Vertreter: WSL Patentanwälte Partnerschaft mbB
(86) Internationale Anmeldenummer: PCT/EP2017/071614
(87) Internationale Veröffentlichungsnummer: WO 2018/041808

(56) Entgegenhaltungen:
- EP-A1- 2 353 737
- EP-A1- 2 743 060
- JP-B1- 5 926 439
- US-A- 3 939 033
- US-A1- 2013 213 580
- US-A1- 2015 210 003
- US-B1- 6 605 178

## Beschreibung

Die vorliegende Erfindung betrifft ein Ultraschallschwingsystem mit einer Sonotrode, welche zwei Sonotrodenstirnflächen und eine die beiden Sonotrodenstirnflächen miteinander verbindende, umlaufende Mantelfläche aufweist, wobei die Sonotrode ein längliches Kernelement und zumindest ein Flügelelement aufweist, wobei sich Kernelement und Flügelelement jeweils von der einen Sonotrodenstirnfläche zur anderen Sonotrodenstirnfläche erstrecken, wobei das Flügelelement eine Siegelfläche aufweist, die dafür vorgesehen ist, mit einem Material zu dessen Bearbeitung in Kontakt zu treten, und über eine Mehrzahl von in Längsrichtung des Kernelementes voneinander beabstandeten Stegen mit dem Kernelement verbunden ist.

Ein solches Ultraschallschwingsystem ist aus der EP 2 353 737 B1 bekannt.

Besonderheit dieser Art von Sonotrode ist, dass die längliche Siegelfläche eine Schwingung in einer Ebene (In-Plane-Schwingung) durchführt, was für bestimmte Anwendungsfälle von Vorteil ist.

Die meisten anderen bekannten Sonotroden sind derart konstruiert, dass sie mit einer Longitudinalschwingung angeregt werden können, sodass sich in Richtung deren Längsachse eine stehende Welle ausbildet. Die Siegelfläche befindet sich dann in einem Schwingungsmaximum und führt in Richtung des zu bearbeitenden Materials eine Longitudinalschwingung durch. Im Grunde genommen bewegt sich die Sonotrode mit einer Ultraschallfrequenz in Richtung des zu bearbeitenden Materials und wieder zurück und "hämmert" somit auf das Material.

Im Gegensatz dazu wird bei der eingangs genannten Sonotrode der Siegelfläche eine In-Plane-Schwingung aufgeprägt, sodass die Siegelfläche auf dem zu bearbeitenden Material hin- und herbewegt wird und eine Reibschweißung erfolgt.

Die der EP 2 353 737 B1 zu Grunde liegende Idee ist es, die Sonotrode mit einer Art Biegeschwingung anzuregen, sodass sich Kernelement und Flügelelement zueinander gegenläufig bewegen. Dabei wird das Kernelement angeregt und aufgrund der Verbindung der Flügelelemente über die Mehrzahl von Stegen führt dies zu einer gegenläufigen Bewegung der am Flügelelement angebrachten Siegelfläche.

In der EP 2 353 737 B1 wird das Kernelement durch einen symmetrisch zur Längsmittelachse des Kernelementes angeordneten Konverter angeregt. Zudem wird die Sonotrode durch den Konverter gehalten. Die Sonotrode weist keine separate Halterung auf, sodass alle Schweißkräfte über den Konverter aufgenommen werden müssen.

Wie bereits in den Figuren der EP 2 353 737 B1 zu sehen ist, zeigen insbesondere die Randbereiche der Siegelflächen jedoch zusätzliche Schwingungsanteile, die senkrecht zur Siegelfläche verlaufen. Im Grunde genommen zeigt die Siegelfläche im angeregten Zustand eine "wellige" Struktur. Die Halterung der Sonotrode über den Konverter an den Stirnflächen führt zudem zu einer Verbiegung der Sonotrode, wenn mit dieser eine Schweißkraft auf das zu bearbeitende Material ausgeübt wird. Diese Verbiegung wiederum hat zur Folge, dass die Siegelfläche keine gleichmäßige Siegelkraft auf das Material ausübt. Dies ist jedoch insbesondere bei der hier verwendeten In-Plane-Schwingung wesentlich für ein homogenes Schweißergebnis. Diese Sonotrode kann daher nur für Anwendungen verwendet werden, bei denen die notwendige Schweißkraft nicht allzu groß ist. Darüber hinaus werden häufig anwenderspezifische Bauraumanforderungen gestellt, die mit dem in der EP 2 353 737 B1 gezeigten Anregungs- und Halteelement nicht erfüllt werden können, da die ohnehin bereits sehr lange Sonotrode in Längsrichtung durch den Konverter noch vergrößert wird.

Die US 3,939,033 A, die EP 2 743 060 A1 und die US 6,605,178 B1 zeigen Sonotroden, die mit einer Longitudinalschwingung angeregt werden können, so dass sich in Richtung deren Längsachse eine stehende Welle ausbildet. Hier befindet sich die Siegelfläche in einem Schwingungsmaximum und führt in Richtung des zu bearbeitenden Materials eine Longitudinalschwingung durch.

Aufgabe der vorliegenden Erfindung ist es daher, die vorgenannten Nachteile zu vermeiden oder zumindest abzuschwächen.

Erfindungsgemäß wird diese Aufgabe durch ein Ultraschallschwingsystem gemäß Anspruch 1 gelöst.

Im Gegensatz zu der EP 2 353 737 B1 erfolgt die Halterung nun nicht mehr über eine symmetrisch zur Längsmittelachse des Kernelementes angeordneten Konverter, sondern über eine Halterung, die an der Mantelfläche der Sonotrode angreift.

Dadurch, dass die Halterung an der Mantelfläche angreift, können auftretende Schweißkräfte besser aufgenommen werden. So ist es beispielsweise möglich, dass die Halterung und der Konverter bzw. der Amplitudentransformator getrennt voneinander ausgeführt sind und daher an voneinander beabstandeten Bereichen an der Sonotrode angreifen. Das Aufbringen einer Schweißkraft führt daher nicht mehr zu einer Verbiegung oder Verkippung der Sonotrode, so dass die Anregungsschwingung unbeeinflusst bleibt.

Es ist vorgesehen, dass die Halterung ein stoffschlüssiges Gelenk mit einem ersten Gelenkglied und einem zweiten Gelenkglied, die über ein flexibles Element miteinander verbunden sind, aufweist. Die Ausführung der Halterung als stoffschlüssiges Gelenk führt zu einer Entkopplung des Maschinenständers von der Sonotrode, um die Beeinflussung des Ultraschallschwingsystems durch die Halterung an dem Maschinenständer zu reduzieren. Dennoch kann das Schwingsystem zuverlässig gehalten werden.

In Übereinstimmung mit der "IFToMM permanent commission for the standardization of terminology" wird hier unter einem stoffschlüssigem Gelenk ein Gelenk verstanden, in dem zwei benachbarte Glieder, nämlich das erste und das zweite Gelenkglied, stofflich miteinander verbunden sind und ihre relative Beweglichkeit durch die Nachgiebigkeit der Verbindung, nämlich des flexiblen Elementes, ermöglicht wird. Stoffschlüssige Gelenke werden auch als Starrkörpergelenk, Festkörpergelenk oder Federgelenke bezeichnet. Erstes und zweites Gelenkglied sowie die Verbindung der Gelenkglieder sind daher einstückig hergestellt. Dabei weist die Verbindung eine gewisse Nachgiebigkeit auf, die eine Verformung und damit eine Relativbewegung zwischen erstem und zweitem Gelenkglied erlaubt.

Ein solches stoffschlüssiges Gelenk ist einfach und kostengünstig herzustellen. Das Gelenk stellt eine Rückstellkraft zur Verfügung, die sicher stellt, dass die Ultraschallschwingeinheit im wesentlich an ihrer vorgesehenen Position verbleibt, wobei eine In-Plane-Schwingung des Flügelelementes zugleich möglichst wenig gedämpft werden soll.

In einer bevorzugten Ausführungsform der Erfindung weist die Sonotrode zwei Flügelelemente auf, die jeweils über eine Mehrzahl von in Längsrichtung des Kernelementes voneinander beabstandeten Stegen mit dem Kernelement verbunden sind, wobei vorzugsweise die beiden Flügelelemente und das Kernelement in einer Ebene liegen.

Bei dieser Ausführungsform kann die Sonotrode symmetrisch zur Längsachse des Kernelementes ausgebildet sein.

Dabei kann bspw. eines der Flügelelemente das erste Gelenkglied sein, welches über ein flexibles Element mit dem Maschinenständer verbunden ist, während das andere Flügelelement die Siegelfläche aufweist, die dafür vorgesehen ist, mit einem Material zu dessen Bearbeitung in Kontakt zu treten.

Daher ist in einer bevorzugten Ausführungsform vorgesehen, dass an einem der Flügelelemente das flexible Element befestigt ist. Es hat sich insbesondere gezeigt, dass das flexible Element in einem Bereich des Flügelelementes angreift, der innerhalb einer gedachten Verlängerung eines der Stege in Richtung des Flügelelementes liegt.

Darüber hinaus ist es von Vorteil, wenn das flexible Element eine Länge zwischen 8 und 25 mm und am besten zwischen 10 und 15 mm hat.

Um eine Übertragung der Schwingung über das flexible Element auf den Maschinenständer zu vermindern, ist es von Vorteil, wenn das flexible Element eine Länge hat, die kleiner als die Länge der Stege ist. Es hat sich gezeigt, dass die flexiblen Elemente am besten eine Länge haben, die zwischen 60 und 90% der Steglänge liegt.

Ebenso ist es von Vorteil wenn die Breite b_{Flex} der flexiblen Elemente in Richtung der Länge L kleiner ist als die Breite bs der Stege. Es hat sich gezeigt dass die flexiblen Elemente am besten eine Breite b_{Flex} haben die zwischen 5 und 90% der Stegbreite bs liegt, bevorzugt zwischen 20 und 60%.

In einer weiteren bevorzugten Ausführungsform ist vorgesehen, dass die Ultraschallschwingeinheit über mindestens zwei, vorzugsweise drei, mit der Mantelfläche verbundenen stoffschlüssige Gelenke mit einem Maschinenständer verbunden ist.

Dabei greifen mit Vorteil alle stoffschlüssigen Gelenke an ein und demselben Flügelelement an.

In einer weiteren bevorzugten Ausführungsform ist ein Konverter vorgesehen, der ggf. über ein Amplitudentransformator mit der Sonotrode verbunden ist, und zwar vorzugsweise mit der Mantelfläche der Sonotrode.

Dadurch, dass Amplitudentransformator oder Konverter nicht mehr an der Stirnfläche der Sonotrode angreifen, sondern an der Mantelfläche, kann die Gesamtlänge des Ultraschallschwingsystems weiter reduziert werden.

Insbesondere dann, wenn der Konverter in einem Bereich mit der Sonotrode verbunden ist, der näher an der einen Sonotrodenstirnfläche als an der anderen Sonotrodenstirnfläche angeordnet ist, kann dieser neben der Sonotrode angeordnet werden, ohne dass die Gesamtlänge der Sonotrode vergrößert wird.

Die Stege können in einer bevorzugten Ausführungsform zwischen in die Mantelfläche eingebrachte Durchgangsöffnung gebildet werden, wobei vorzugsweise die Durchgangsöffnungen länglich sind und sich deren Längsrichtung vom Kernelement zu dem Flügelelement erstreckt. Dabei weist das Flügelelement vorzugsweise eine Dicke auf, die geringer als die Dicke des Kernelementes ist, wobei vorzugsweise die Dicke des Flügelelementes kleiner als 75% der Dicke des Kernelementes beträgt. Weiterhin weist das Flügelelement eine Breite auf, die geringer als die Breite des Kernelementes ist, wobei vorzugsweise die Breite des Flügelelementes kleiner als 30% der Breite des Kernelementes beträgt. Es hat sich gezeigt, dass dadurch die Bewegung der Siegelfläche des Flügelelementes verstärkt werden kann.

Weitere Vorteile, Merkmale und Anwendungsmöglichkeiten der vorliegenden Erfindung werden deutlich anhand der folgenden Beschreibung zweier Ausführungsformen der Erfindung und der zugehörigen Figuren. Es zeigen:
- Figur 1: Eine Draufsicht auf eine erste Ausführungsform einer erfindungsgemäßen Ultraschallschwingeinheit,
- Figur 2: eine perspektivische Ansicht auf die Ausführungsform von Figur 2,
- Figur 3: eine seitliche Ansicht der Ausführungsform von Figur 1,
- Figur 4: eine Draufsicht auf eine zweite Ausführungsform der Erfindung und
- Figur 5: eine perspektivische Ansicht der Ausführungsform von Figur 4.

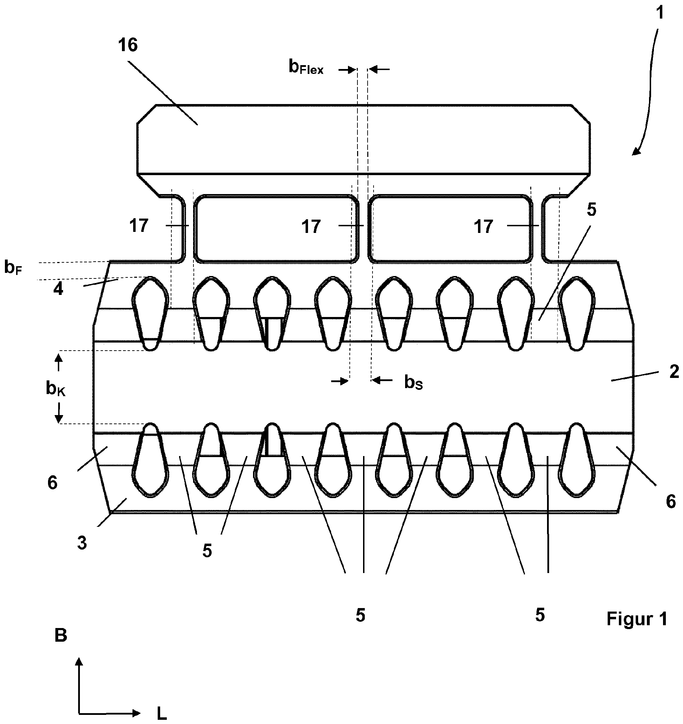

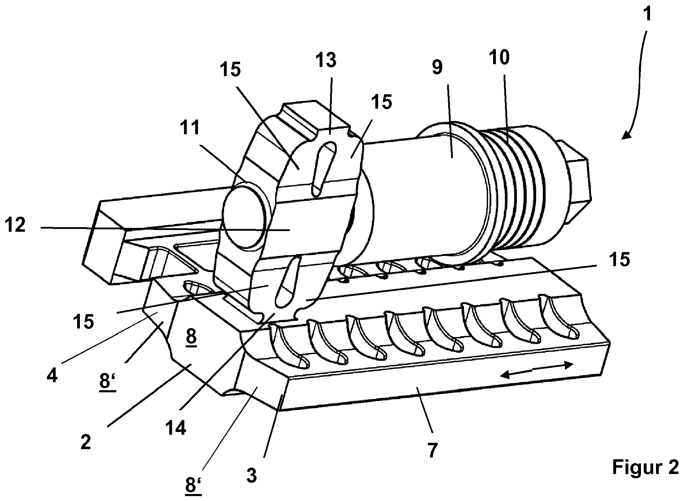

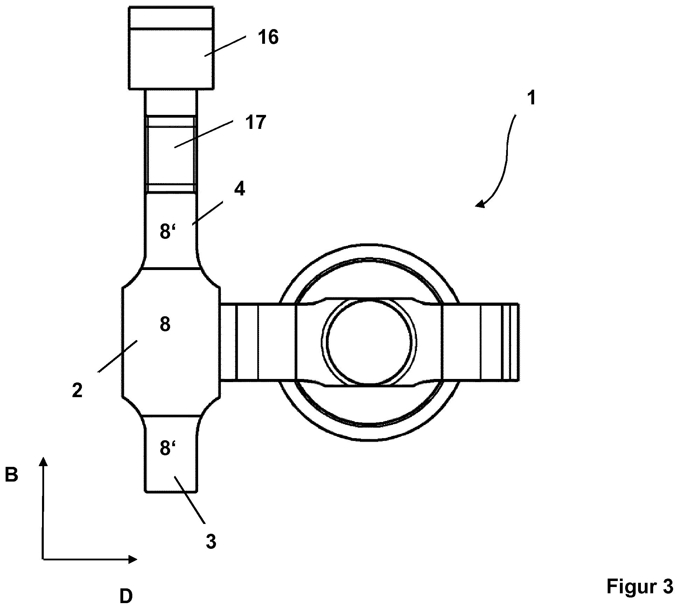

In Figur 1 ist eine erste Ausführungsform eines Ultraschallschwingsystems 1 dargestellt. In Figur 2 ist eine perspektivische Ansicht dieser Ausführungsform gezeigt, während in Figur 3 eine seitliche Ansicht dargestellt ist.

Das Ultraschallschwingsystem 1 besteht aus einer Sonotrode, welche wiederum ein Kernelement 2 und zwei Flügelelemente 3, 4 aufweist. Die Flügelelemente 3, 4 sind über entsprechende Stege 5, 6 mit dem Kernelement 2 verbunden. Sowohl Kernelement 2 als auch Flügelelemente 3,4 erstrecken sich in Längsrichtung L. Die Sonotrode weist eine Reihe von Durchgangsöffnungen auf, die derart angeordnet sind, dass zwischen den Durchgangsöffnungen die Stege 5, 6 gebildet werden.

Man erkennt in Figur 2, dass das Kernelement 2 eine größere Dicke (in der Richtung D) aufweist als die beiden Flügelelemente 3, 4. Ebenso weist das Kernelement 2 eine Breite b_{K} (in der Richtung B) auf, die größer als die Breite b_{F} der Flügelelemente ist. Das Kernelement 2 ist länglich ausgeführt und weist zusammen mit den Flügelelementen 3, 4 bzw. den Verbindungsstegen 5, 6 zwei Stirnflächen auf, die über eine umlaufende Mantelfläche miteinander verbunden sind. Die Mantelfläche ist in Figur 1 gut zu sehen, während in Figur 3 ein Blick auf eine der beiden Stirnflächen 8,8' dargestellt ist. Die Stirnfläche 8,8' der Sonotrode weist zwei Fasenflächen 8' auf.

Ein Flügelelement 3 weist eine Siegelfläche 7 auf, die dafür vorgesehen ist, mit dem zu bearbeitenden Material in Kontakt zu treten. Diese Siegelfläche soll im Betrieb eine möglichst homogene In-Plane-Schwingung durchführen, deren Richtung in Figur 2 schematisch mittels eines Doppelpfeils dargestellt ist.

Um eine solche In-Plane-Schwingung der Siegelfläche 7 zu ermöglichen, muss die Ultraschallschwingeinheit 1 angeregt werden. Bei der gezeigten Ausführungsform wird das Kernelement 2 in eine Ultraschallschwingung gebracht, die mittels der Stege 5, 6 auf die Flügelelemente und insbesondere auf die Siegelfläche 7 übertragen wird. Zur Anregung wird ein Konverter 9 mit entsprechenden Piezoelementen 10 verwendet, welche eine elektrische Wechselspannung in eine longitudinale mechanische Ultraschallschwingung umwandeln. Diese wird auf den Amplitudentransformator 11 übertragen, der hier einen ähnlichen Aufbau hat wie die Sonotrode, nämlich aus einem Amplitudentransformatorkernelement 12, Amplitudentransformatorflügelelementen 13, 14 und Verbindungsstegen 15, welche das Amplitudentransformatorkernelement 12 mit den Amplitudentransformatorflügelelementen 13, 14 verbindet, besteht.

Aufgrund der Ankopplung des Konverters 9 am Amplitudentransformator 11 wird das Amplitudentransformatorkernelement 12 in eine In-Plane-Schwingung gebracht, welche über die Verbindungsstege 15 auf die Amplitudentransformatorflügelelemente 13, 14 übertragen wird. Da das Amplitudentransformatorflügelelement 14 mit dem Kernelement 2 der Sonotrode verbunden ist, überträgt sich die Schwingung auf die Sonotrode und damit auf die Siegelfläche 7. Im Ergebnis erhält man eine sehr kompakte Ausführungsform einer Ultraschallschwingeinheit 1.

Um die Schwingungsamplitude möglichst wenig zu beeinflussen, ist an dem der Siegelfläche 7 abgewandten Seite der Sonotrode, d.h. an dem Flügelelement 4 eine Halterung vorgesehen, die aus einem Befestigungsbalken 16, der fest mit einem Maschinenständer verbunden werden kann, und entsprechenden flexiblen Elementen 17 gebildet wird. In dem Befestigungsbalken 16 können Bohrungen zum Befestigen des Befestigungsbalkens 16 an dem Maschinenständer angeordnet sein. Dabei bilden Flügelelement 4, flexible Elemente 17 und Befestigungsbalken 16 Starrkörpergelenke. Die flexiblen Elemente 17 haben in der Richtung B eine Länge von etwa 14 mm. Die flexiblen Elemente 17 werden durch blattförmige Elemente gebildet, die in Längsrichtung L eine deutlich geringere Abmessung haben als in den beiden dazu senkrechten Richtungen B und D. Dies hat zur Folge, dass die flexiblen Elemente in Längsrichtung L eine viel größere Flexibilität aufweisen als in den dazu senkrechten Richtungen. Durch diese Maßnahme ist eine zuverlässige Halterung der Sonotrode auch bei Ausübung einer Schweißkraft auf die Siegelfläche möglich, während gleichzeitig die In-Plane-Schwingung des Flügelelementes 4 aufgrund der flexiblen Elemente nur geringfügig beeinflusst wird.

In Figur 1 ist zu erkennen, dass alle flexiblen Elemente 17 zumindest zum Teil im Bereich einer Projektion der Stege auf das Flügelelement 4 an dem Flügelelement angreifen. Die Projektionen sind in Figur 1 als gestrichelte Linie eingezeichnet. Die flexiblen Elemente sind daher nicht "oberhalb" der Durchgangsöffnungen angeordnet, sondern "oberhalb" der Stege.

In dem dargestellten Beispiel ist das Flügelelement 3 über insgesamt neun Stege 5, 6 mit dem Kernelement 2 verbunden. Man erkennt, dass die Stirnflächen beidseits in Richtung der Flügelelemente jeweils eine Fasenfläche aufweisen, wodurch die Breite der äußeren Stege 6 verringert wird. Durch diese Maßnahme kann das Schwingungsverhalten der Sonotrode verbessert werden.

Des Weiteren ist die Breite b_{Flex} der flexiblen Elemente in Richtung der Länge L kleiner als die Breite bs der Stege. Unter der Breite bs wird im Falle einer nicht konstanten Breite die minimale Breite verstanden, wie in Figur 1 dargestellt. Genauso wird unter der Breite b_{Flex} für den Fall einer nicht konstanten Breite des flexiblen Elementes die minimale Breite des flexiblen Elementes verstanden.

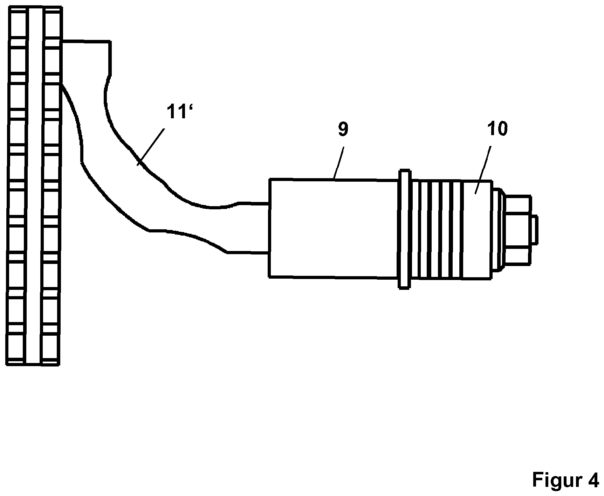

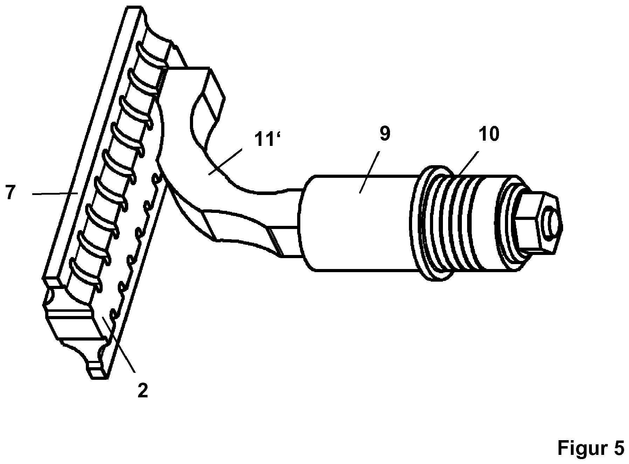

In den Figuren 4 und 5 ist eine zweite Ausführungsform der Erfindung gezeigt. Hierbei ist die Sonotrode in gleicher Weise ausgeführt wie in der in den Figuren 1 bis 3 gezeigten Ausführungsform. Einziger Unterschied ist hier, dass ein anderer Amplitudentransformator verwendet wird. Dieser besteht im Wesentlichen aus einem gekrümmten Element 11', welches die vom Konverter 9 mittels der Piezoscheiben 10 erzeugten longitudinalen Ultraschallschwingung in eine In-Plane-Schwingung umsetzt. Der gekrümmte Amplitudentransformator 11' steht dann wieder mit dem Kernelement 2 der Sonotrode in Verbindung.

Die Halterung kann wie in der in den Figuren 1 bis 3 gezeigten Ausführungsform erfolgen. Die Halterung ist in den Figuren 4 und 5 jedoch nicht abgebildet.

### Bezugszeichen

- 1: Ultraschallschwingsystem/Ultraschallschwingeinheit
- 2: Kernelement
- 3: Flügelelement
- 4: Flügelelement
- 5: Steg
- 6: Steg
- 7: Siegelfläche
- 8,8': Stirnfläche
- 9: Konverter
- 10: Piezoelement
- 11: Amplitudentransformator
- 11': gekrümmtes Element
- 12: Amplitudentransformatorkernelement
- 13: Amplitudentransformatorflügelelement
- 14: Amplitudentransformatorflügelelement
- 15: Verbindungsstege
- 16: Befestigungsbalken
- 17: flexible Elemente

## Patentansprüche

1. Ultraschallschwingsystem mit einer Sonotrode, welche zwei Sonotrodenstirnflächen (8, 8') und eine die beiden Sonotrodenstirnflächen (8, 8') miteinander verbindende, umlaufende Mantelfläche aufweist, wobei die Sonotrode ein längliches Kernelement (2) und zumindest ein Flügelelement (3, 4) aufweist, wobei sich Kernelement (2) und Flügelelement (3, 4) jeweils von der einen Sonotrodenstirnfläche (8, 8') zur anderen Sonotrodenstirnfläche (8, 8') in einer Längsrichtung erstrecken, wobei das Flügelelement (3) eine Siegelfläche (7) aufweist, die dafür vorgesehen ist, mit einem Material zu dessen Bearbeitung in Kontakt zu treten, und über eine Mehrzahl von in Längsrichtung voneinander beabstandeten Stegen (5, 6) mit dem Kernelement (2) verbunden ist, und einem Konverter, der gegebenenfalls über einen Amplitudentransformator (11) mit der Sonotrode verbunden ist, wobei das Ultraschallschwingsystem über eine mit der Mantelfläche verbundenen Halterung mit einem Maschinenständer verbunden ist, **dadurch gekennzeichnet, dass** die Halterung ein stoffschlüssiges Gelenk mit einem ersten Gelenkglied und einem zweiten Gelenkglied, die über ein flexibles Element (17) miteinander verbunden sind, aufweist, wobei unter einem stoffschlüssigen Gelenk ein Gelenk verstanden wird, in dem das erste und das zweite Gelenkglied stofflich miteinander verbunden sind, also einstückig hergestellt sind, und ihre relative Beweglichkeit durch die Nachgiebigkeit der Verbindung, nämlich des flexiblen Elementes, ermöglicht wird, wobei die Nachgiebigkeit eine Verformung und damit eine Relativbewegung zwischen erstem und zweitem Gelenkglied erlaubt.

2. Ultraschallschwingsystem nach Anspruch 1, **dadurch gekennzeichnet, dass** die Sonotrode zwei Flügelelemente (3, 4) aufweist, die jeweils über eine Mehrzahl von in Längsrichtung des Kernelementes (2) voneinander beabstandeten Stegen (5, 6) mit dem Kernelement (2) verbunden sind, wobei vorzugsweise die beiden Flügelelemente (3, 4) und das Kernelement (2) in einer Ebene liegen.

3. Ultraschallschwingsystem nach Anspruch 2, **dadurch gekennzeichnet, dass** eines der Flügelelemente (4) das erste Gelenkglied ist.

4. Ultraschallschwingsystem nach Anspruch 3, **dadurch gekennzeichnet, dass** an dem ersten Gelenkglied (4) das flexible Element (17) befestigt ist.

5. Ultraschallschwingsystem nach Anspruch 4, **dadurch gekennzeichnet, dass** das flexible Element (17) in einem Bereich des ersten Gelenkgliedes (4) angreift, der innerhalb einer gedachten Verlängerung eines der Stege (5, 6) in Richtung des ersten Gelenkgliedes (4) liegt.

6. Ultraschallschwingsystem nach einem der Ansprüche 4 bis 5, **dadurch gekennzeichnet, dass** das flexible Element (17) eine Länge zwischen 8 und 25 mm und vorzugsweise zwischen 10 und 15 mm hat.

7. Ultraschallschwingsystem nach einem der Ansprüche 1 bis 6, **dadurch gekennzeichnet, dass** die Breite b_{Flex} der flexiblen Elemente (17) in Richtung der Länge L kleiner ist als die Breite bs der Stege, wobei die flexiblen Elemente am besten eine Breite b_{Flex} haben, die zwischen 5 und 90% der Stegbreite bs liegt, bevorzugt zwischen 20 und 60%.

8. Ultraschallschwingsystem nach einem der Ansprüche 1 bis 7, **dadurch gekennzeichnet, dass** die Ultraschallschwingeinheit über mindestens zwei, vorzugsweise drei, mit der Mantelfläche verbundene stoffschlüssige Gelenke mit einem Maschinenständer verbunden ist.

9. Ultraschallschwingsystem nach einem der Ansprüche 1 bis 8, **dadurch gekennzeichnet, dass** ein Konverter vorgesehen ist, der - gegebenenfalls über einen Amplitudentransformator - mit der Mantelfläche der Sonotrode verbunden ist.

10. Ultraschallschwingsystem nach einem der Ansprüche 1 bis 9, **dadurch gekennzeichnet, dass** die Stege (5, 6) zwischen in die Mantelfläche eingebrachte Durchgangsöffnungen gebildet werden, wobei vorzugsweise die Durchgangsöffnungen länglich sind und sich deren Längsrichtung vom Kernelement (2) zu dem Flügelelement (3, 4) erstreckt.

11. Ultraschallschwingsystem nach einem der Ansprüche 1 bis 10, **dadurch gekennzeichnet, dass** das Flügelelement (3, 4) eine Dicke aufweist, die geringer als die Dicke des Kernelementes (2) ist, wobei vorzugsweise die Dicke des Flügelelements (3, 4) kleiner als 75% der Dicke des Kernelementes (2) beträgt.

12. Ultraschallschwingsystem nach einem der Ansprüche 1 bis 11, **dadurch gekennzeichnet, dass** das Flügelelement (3, 4) eine Breite aufweist, die geringer als die Breite des Kernelementes (2) ist, wobei vorzugsweise die Breite des Flügelelementes (3, 4) kleiner als 50% und besonders bevorzugt kleiner als 35% der Breite des Kernelementes (2) beträgt.

## Claims

1. An ultrasonic vibration system comprising a sonotrode which has two sonotrode end faces (8, 8') and a circumferentially extending lateral surface connecting the two sonotrode end faces (8, 8') together, wherein the sonotrode has an elongate core element (2) and at least one wing element (3, 4), wherein core element (2) and wing element (3, 4) respectively extend from the one sonotrode end face (8, 8') to the other sonotrode end face (8, 8') in a longitudinal direction, wherein the wing element (3) has a sealing surface (7) which is provided to come into contact with a material for processing thereof and is connected to the core element (2) by way of a plurality of webs (5, 6) spaced from each other in the longitudinal direction, and a converter which is optionally connected to the sonotrode by way of an amplitude transformer (11), wherein the ultrasonic vibration system is connected to a machine stand by way of a mounting connected to the lateral surface, **characterised in that** the mounting has a material-bonded joint comprising a first joint member and a second joint member which are connected together by way of a flexible element (17), wherein a material-bonded joint is understood to be a joint in which the first and second joint members are material-bonded to one another, i.e. are manufactured in one piece, and their relative mobility is made possible by the resilience of the connection, namely of the flexible element, the resilience permitting deformation and thus relative movement between the first and second joint members.

2. An ultrasonic vibration system according to claim 1 **characterised in that** the sonotrode has two wing elements (3, 4) which are respectively connected to the core element (2) by way of a plurality of webs (5, 6) spaced from each other in the longitudinal direction of the core element (2), wherein preferably the two wing elements (3, 4) and the core element (2) are disposed in one plane.

3. An ultrasonic vibration system according to claim 2 **characterised in that** the one of the wing elements (4) is the first joint member.

4. An ultrasonic vibration system according to claim 3 **characterised in that** the flexible element (17) is fixed to the first joint member (4).

5. An ultrasonic vibration system according to claim 4 **characterised in that** the flexible element (17) engages in a region of the first joint member (4), which lies within a notional prolongation of one of the webs (5, 6) in the direction of the first joint member (4).

6. An ultrasonic vibration system according to one of claims 4 to 5 **characterised in that** the flexible element (17) is of a length of between 8 and 25 mm and preferably between 10 and 15 mm.

7. An ultrasonic vibration system according to one of claims 1 to 6 **characterised in that** the width b_{Flex} of the flexible elements (17) in the direction of the length L is less than the width bₛ of the webs; it has been found that the flexible elements at best are of a width b_{Flex} which is between 5 and 90% of the web width bs, preferably between 20 and 60%.

8. An ultrasonic vibration system according to one of claims 1 to 7 **characterised in that** the ultrasound vibration unit is connected to a machine stand by way of at least two and preferably three material-bonded joints connected to the lateral surface.

9. An ultrasonic vibration system according to one of claims 1 to 8 **characterised in that** there is provided a converter which is optionally connected to the sonotrode by way of an amplitude transformer, more specifically preferably to the lateral surface of the sonotrode.

10. An ultrasonic vibration system according to one of claims 1 to 9 **characterised in that** the webs (5, 6) are formed between through openings in the lateral surface, wherein preferably the through openings are elongate and the longitudinal direction thereof extends from the core element (2) to the wing element (3, 4).

11. An ultrasonic vibration system according to one of claims 1 to 10 **characterised in that** the wing element (3, 4) is of a thickness less than the thickness of the core element (2), wherein preferably the thickness of the wing element (3, 4) is less than 75% of the thickness of the core element (2).

12. An ultrasonic vibration system according to one of claims 1 to 11 **characterised in that** the wing element (3, 4) is of a width less than the width of the core element (2), wherein preferably the width of the wing element (3, 4) is less than 50% and particularly preferably less than 35% of the width of the core element (2).

## Revendications

1. Système oscillant à ultrasons comprenant une sonotrode présentant deux surfaces frontales de sonotrode (8, 8') et une surface extérieure périphérique reliant les deux surfaces frontales de sonotrode (8, 8') l'une à l'autre, la sonotrode présentant un élément central (2) allongé et au moins un élément formant ailette (3, 4), l'élément central (2) et l'élément formant ailette (3, 4) s'étendant dans une direction longitudinale respectivement à partir d'une surface frontale de sonotrode (8, 8') jusqu'à l'autre surface frontale de sonotrode (8, 8'), l'élément formant ailette (3) présentant une surface de scellement (7) conçue pour venir en contact avec un matériau en vue du traitement de celui-ci et étant raccordé à l'élément central (2) par l'intermédiaire d'une pluralité de barrettes (5, 6) espacées les unes des autres dans la direction longitudinale, et un convertisseur relié éventuellement à la sonotrode par l'intermédiaire d'un transformateur d'amplitude (11), le système oscillant à ultrasons étant relié à un bâti de machine par l'intermédiaire d'un support relié à la surface extérieure, **caractérisé en ce que** le support comprend une articulation matériellement solidaire comportant des premier et second éléments articulés reliés l'un à l'autre par l'intermédiaire d'un élément flexible (17), une articulation matériellement solidaire désignant une articulation au sein de laquelle les premier et second éléments articulés sont matériellement reliés l'un à l'autre, c'est-à-dire sont réalisés d'un seul tenant, et leur mobilité relative est rendue possible par la flexibilité de la liaison, c'est-à-dire de l'élément flexible, la flexibilité permettant une déformation et donc un mouvement relatif entre les premier et second éléments articulés.

2. Système oscillant à ultrasons selon la revendication 1, **caractérisé en ce que** la sonotrode présente deux éléments formant ailette (3, 4) reliés respectivement à l'élément central (2) par l'intermédiaire de plusieurs barrettes (5, 6) espacées les unes des autres dans la direction longitudinale de l'élément central (2), les deux éléments formant ailette (3, 4) et l'élément central (2) se trouvant de manière préférée dans un plan.

3. Système oscillant à ultrasons selon la revendication 2, **caractérisé en ce que** l'un des éléments formant ailette (4) est le premier élément articulé.

4. Système oscillant à ultrasons selon la revendication 3, **caractérisé en ce que** l'élément flexible (17) est fixé sur le premier élément articulé (4).

5. Système oscillant à ultrasons selon la revendication 4, **caractérisé en ce que** l'élément flexible (17) agit dans une région du premier élément articulé (4) qui se trouve à l'intérieur d'un prolongement imaginaire d'une des barrettes (5, 6) en direction du premier élément articulé (4).

6. Système oscillant à ultrasons selon l'une quelconque des revendications 4 à 5, **caractérisé en ce que** l'élément flexible (17) présente une longueur comprise entre 8 et 25 mm et de manière préférée comprise entre 10 et 15 mm.

7. Système oscillant à ultrasons selon l'une quelconque des revendications 1 à 6, **caractérisé en ce que** la largeur b_{Flex} des éléments flexibles (17) dans la direction de la longueur L est inférieure à la largeur bs des barrettes, les éléments flexibles présentant de manière préférée une largeur b_{Flex} comprise entre 5 et 90 %, de manière préférée comprise entre 20 et 60 %, de la largeur bs des barrettes.

8. Système oscillant à ultrasons selon l'une quelconque des revendications 1 à 7, **caractérisé en ce que** l'unité oscillante à ultrasons est reliée à un bâti de machine par l'intermédiaire d'au moins deux, de manière préférée trois, articulations matériellement solidaires reliées à la surface extérieure.

9. Système oscillant à ultrasons selon l'une quelconque des revendications 1 à 8, **caractérisé en ce qu'**un convertisseur relié à la surface extérieure de la sonotrode, éventuellement par l'intermédiaire d'un transformateur d'amplitude, est fourni.

10. Système oscillant à ultrasons selon l'une quelconque des revendications 1 à 9, **caractérisé en ce que** les barrettes (5, 6) sont formées entre des orifices traversants ménagés dans la surface extérieure, les orifices traversants étant de manière préférée allongés et leur direction longitudinale s'étendant de l'élément central (2) vers l'élément formant ailette (3, 4).

11. Système oscillant à ultrasons selon l'une quelconque des revendications 1 à 10, **caractérisé en ce que** l'élément formant ailette (3, 4) présente une épaisseur inférieure à l'épaisseur de l'élément central (2), l'épaisseur de l'élément formant ailette (3, 4) étant de manière préférée inférieure à 75 % de l'épaisseur de l'élément central (2).

12. Système oscillant à ultrasons selon l'une quelconque des revendications 1 à 11, **caractérisé en ce que** l'élément formant ailette (3, 4) présente une largeur inférieure à la largeur de l'élément central (2), la largeur de l'élément formant ailette (3, 4) étant de manière préférée inférieure à 50 % et de manière particulièrement préférée inférieure à 35 % de la largeur de l'élément central (2).
